# EUROPÄISCHE PATENTSCHRIFT

(11) **EP 0 427 661 B1**
(45) Veröffentlichungstag und Bekanntmachung des Hinweises auf die Patenterteilung: **25.10.1995**
(21) Anmeldenummer: 90710013.5
(22) Anmeldetag: 11.06.1990
(51) Int. Cl.: B23Q 3/155, G06K 19/06, B23Q 41/00

(54) **Werkzeugidentifikation**
Tool identification
Identification d'outil

(30) Priorität: 16.06.1989 DE 3919699
(43) Veröffentlichungstag der Anmeldung: 15.05.1991
(73) Patentinhaber: Isleib, Hans Gerd, D-42699 Solingen (DE)
(72) Erfinder: Isleib, Hans Gerd, D-42699 Solingen (DE)

(56) Entgegenhaltungen:
- WO-A-87/01798
- DE-A- 1 652 694
- DE-A- 3 607 771
- US-A- 4 620 362

## Beschreibung

Die Erfindung betrifft ein Verfahren zur Identifikation eines Werkzeugeinsatzes mit einem Werkzeug in einer Werkzeugaufnahme. Sie betrifft auch einen Werkzeugeinsatz mit einem in dem Rastkopf der Werkzeugaufnahme angeordneten bestimmten zusätzlichen elektrischen Widerstand zur drehwinkelunabhängigen Identifikation des Werkzeugeinsatzes.
In Dokument DE-A-3 607 771 wird zur Identifizierung eines Werkzeuges in einem Werkzeugeinsatz ein Datenträger in Form eines Microchipsin eine Ausnehmung in der Werkzeugaufnahme angeordnet.
Zum Ablesen der in dem Microchip befindlichen Daten wird ein Lesekopf entweder stationär an einem Werkzeugeinsatzgreifer, einem Werkzeugeinsatzspeicher oder dergleichen angeordnet oder von Hand an den Datenträger herangeführt. Die abgelesenen Daten werden über ein Antennenkabel einer Auswerteeinheit zugeführt.

Diese vergleicht die abgelesenen Ist-Daten mit den Soll-Daten und entscheidet beispielsweise über eine Freigabe oder Blockierung des Werkzeugeinsatzes in dem Werkzeugspeicher. Nachteilig an dieser Ausführung ist vor allem hinsichtlich eines möglichen Nachrüstens vorhandener Werkzeugeinsätze der hohe Kostenaufwand. Auch erfordert diese Art der Werkzeugidentifizierung eine technisch anspruchsvolle Einrichtung des Schiebers oder einer Werkstatt. Ein Wechsel in der Zuordung des Microchips zu einem Werkzeug oder eine Änderung in den Kennungsdaten ist nur mit vergleichsweise großem Aufwand möglich.
Dokument WO-A-87 011798 offenbart ein Verfahren zur Erkennung eines Werkzeugeinsatzes mit einem Werkzeug in einer Werkzeugaufnahme. Hierbei wird ein speziell konstruierter Werkzeugeinsatz mit mehreren voneinander isolierten elektrischen Kontakten verwendet. Zwischen zwei dieser Kontakte ist ein in dem Werkzeugeinsatz angebrachter elektrischer Widerstand geschaltet. Über zwei entsprechende Gegenkontakte des Werkzeughalterungskopfes kann der Werkzeugeinsatz dann nach der Aufnahme in den Werkzeughalterungskopf elektrisch identifiziert werden. Nachteilig an dieser Ausführung ist vor allem die spezielle Geometrie des Werkzeugeinsatzes, die ein Nachrüsten vorhandener Werkzeugeinsätze unmöglich erscheinen läßt. Nachteilig ist es überdies, daß der Werkzeugeinsatz aufgrund der Kontaktanordung nicht drehwinkelunabhängig in den Werkzeughalterungskopf aufgenommen werden kann und die Identifikation des Werkzeugeinsatzes erst nach erfolgter Aufnahme in den Werkzeughalterungskopf erfolgen kann.
Aufgabe der Erfindung ist es, ein Verfahren zur Identifikation eines Werkzeugeinsatzes mit einem Werkzeug in einer Werkzeugaufnahme anzugeben. In einem intelligenten Werkzeugspeicher sollen durch die Erfindung Fehlermöglichkeiten bei einem manuellen Werkzeugwechsel ausgeschlossen werden.
Aufgabe der Erfindung ist es überdies, einen gattungsmäßigen Werkzeugeinsatz sowie einen dazugehörigen Rastkopf herstellungstechnisch einfach, gebrauchsvorteilhaft auszubilden, daß insbesondere etwa ein Nachrüsten vorhandener Werkzeugeinsätze rationell möglich ist.

Die erstgenannte Aufgabe ist durch die im Anspruch 1 angegebene Erfindung gelöst. Erfindungsgemäß ist in der Werkzeugauf nahme ein bestimmter zusätzlicher elektrischer Widerstand angeordnet zur elektrischen Individualisierung des Werkzeugeinsatzes. Zufolge dieser Ausgestaltung ist eine genaue Identifikation des Werkzeugeinsatzes zu erreichen. Einem bestimmten, in der Werkzeugaufnahme angeordneten Werkzeug ist ein bestimmter elektrischer Widerstand zugeordnet. Somit kann jeder Werkzeugeinsatz mittels einer Widerstandsmessung definiert und geprüft werden, ob dieser für den anstehenden Arbeitsprozeß geeignet ist. So ist bei einem Auswechseln des Werkzeugeinsatzes in einer Werkzeugmaschine eine Prüfung des Werkzeugeinsatzes durchführbar, bei welchem der Widerstand mittels eines Ohmmeters gemessen und anschließend der ermittelte Wert mit dem z. B. in einer Tabelle vorgegebenen Wert verglichen wird. Als vorteilhaft erweist es sich hierbei, daß der Widerstand in einem Rastkopf der Werkzeugaufnahme angeordnet ist. Da ein solcher Rastkopf bekanntlich mit der Werkzeugaufnahme verschraubt ist, besteht somit die Möglichkeit schon vorhandene Werkzeugaufnahmen mit verschiedenen, mit unterschiedlichen Widerständen bestückten Rastköpfen nachzurüsten. Des weiteren besteht noch die Möglichkeit, einen Rastkopf ohne großen Arbeitsaufwand gegen einen neuen, mit einem anderem Widerstand versehenen Rastkopf auszutauschen. Dies ist vor allem dann notwendig, wenn die Werkzeugaufnahme mit einem neuen Werkzeug bestückt werden soll. Der Erfindungsgedanke schließt es auch ein, den Rastkopf, wie er nachstehend noch weiter im einzelnen beschrieben ist, einstückig unmittelbar integriert mit der Werkzeugaufnahme auszubilden. Nach einer Weiterbildung der Erfindung ist vorgesehen, daß der Werkzeugeinsatz durch einen Zu-und Ableitungskontakt in eine elektrische Schaltung integrierbar ist. Es ist somit eine Vorrichtung geschaffen, die dem Benutzer auf einfachste Weise den gewünschten Widerstandswert anzeigt oder sogleich diesen Ist-Wert mit einem vorgegebenen Soll-Wert vergleicht und z. B. mit einer grün/roten Lichtquelle anzeigt, ob das Werkzeug der Vorgabe entspricht oder nicht. Diese Meldung kann auch akustisch erfolgen. Eine vorteilhafte Weiterbildung besteht darin, daß die Zu- und Ableitungskontakte außen auf der in ihrer äußeren Geometrie unveränderten Werkzeugaufnahme auf liegen. Demgemäß ist ein kosten- und arbeitsaufwendiges Abändern der Werkzeugaufnahme nicht erforderlich. Weiterhin besteht ein vorteilhaftes Merkmal darin, daß ein erster Leitungsanschluß des widerstandes elektrisch mit der metallischen Werkzeugaufnahme verbunden ist und daß der zweite Leitungsanschluß derart isoliert ist, daß er elektrisch nur mit dem zugeordneten Kontakt leitend verbindbar ist. Zufolge dieser Ausgestaltung ist ein genaues Messen des elektrischen Widerstandes unter Berücksichtigung des bei allen Werkzeugaufnahmen desselben Types gleichbleibenden Eigenwiderstandes gewährleistet. Erfindungsgemäß kann die Anordnung so getroffen sein, daß der zweite Leitungsanschluß des Widerstandes mit einem in der Stirnfläche des Rastkopfes angeordneten, gegen die Werkzeugaufnahme isolierten Gegenkontakt elektrisch leitend verbunden ist. Diese Ausgestaltung ermöglicht es, daß der Rastkopf in seiner äußeren Geometrie gegenüber einem herkömmlichen Rastkopf nicht verändert wird. Nach einer Weiterbildung der Erfindung ist vorgesehen, daß der Gegenkontakt kreisförmig ausgebildet ist, symmetrisch angeordnet zu einer Mittelachse des Werkzeugeinsatzes. Somit ist der Abgriff des Gegenkontaktes unabhängig von der Drehwinkellage der Werkzeugaufnahme. Um auch eine von der Drehwinkellage der Werkzeugaufnahme unabhängige Messung zu erzielen, ist es vorteilhaft, daß der Ableitungskontakt dem Gegenkontakt zugeordnet ist und daß der Zuleitungskontakt radial auf die Werkzeugaufnahme eindringt. Als besonders vorteilhaft erweist es sich hierbei, daß der Zuleitungskontakt so angeordnet ist, daß er in leitende Verbindung zu einer Konusfläche der Werkzeugaufnahme tritt. Des weiteren ist vorgesehen, daß die Zu- und Ableitungskontake in einem Werkzeugspeicher angeordnet sind. Somit wird eine automatische Widerstandsmessung der einzelnen Werkzeugeinsätze ermöglicht. Die Erfindung bezieht sich auch auf die Möglichkeit, den Werkzeugspeicher mit einer Vorrichtung auszustatten, die es ermöglicht, nach erfolgtem Messen und Vergleichen der Ist-und Soll-Werte einen Werkzeugeinsatz freizugeben oder zu blockieren. Eine vorteilhafte Weiterbildung besteht darin, daß der Zuleitungskontakt in einer aus isolierendem Werkstoff gebildeten Konusaufnahme des Werkzeugspeichers angeordnet ist. Durch diese Anordnung ist eine sichere, isolierende Trennung der in dem Werkzeugspeicher angeordneten Zu- und Ableitungskontakte gewährleistet.

Verfahrensmäßig ist die Erfindung darauf gerichtet, daß eine Erkennung eines Werkzeugeinsatzes mit einem Werkzeug in einer Werkzeugaufnahme dadurch erzielt wird, daß die Werkzeugaufnahme hinsichtlich ihres elektrischen Widerstandes individualisiert wird und daß die Werkzeugaufnahme insgesamt als Widerstand in eine elektrische Schaltung eingesetzt wird. Mit dieser Ausgestaltung ist auf einfachste Weise eine Werkzeug-Identifikation realisiert. Zusätzlich zum konstanten Eigenwiderstand wird der Werkzeugaufnahme ein individueller elektrischer Widerstand hinzugefügt, der einem bestimmten Code des der Aufnahme zugeordneten Werkzeuges entspricht. Mittels der elektrischen Schaltung kann somit der ermittelte Widerstandswert auch die Art und Größe des betreffenden Werkzeuges beschreiben. Als besonders vorteilhaft erweist es sich dabei, daß die elektrische Schaltung in einem Werkzeugspeicher realisiert ist, wobei in Abhängigkeit des Widerstandes der Werkzeugaufnahme eine Freigabe oder eine Blockierung des Werkzeugeinsatzes in dem Werkzeugspeicher durchgeführt wird. Diese Anordnung kann somit sogar in automatische Werkzeugwechseleinrichtungen eingefügt werden. Denkbar ist allerdings auch eine Lösung, bei der der Wekzeugeinsatz extern in eine Meßvorrichtung eingesetzt und geprüft wird. Dies ist vor allem bei solchen Systemen von Vorteil, bei denen von Hand der jeweilig erforderliche Werkzeugeinsatz eingebracht wird. Um eine vollautomatische Messung und Prüfung bei Werkzeugspeichern zu gewährleisten und die manuelle Messung hinsichtlich der Handhabung zu erleichtern, ist vorgesehen, daß ein Stromkreis der elektrischen Schaltung durch ein Einsetzen des Werkzeugeinsatzes in den Werkzeugspeicher geschlossen wird. Ein zusätzliches Betätigen eines Schalters oder dergleichen ist nicht erforderlich.

Um ein Nachrüsten von vorhandenen Werkzeugeinsätzen zu erleichtern, betrifft die Erfindung auch einen Rastkopf für einen Werkzeugeinsatz, indem in einer im wesentlichen axial orientierten Bohrung ein einseitig hinsichtlich eines Leitungsanschlusses isolierter Widerstand angeordnet ist. Der Rastkopf dient somit als Codeträger und kann dadurch bedingt, daß er hinsichtlich seiner äußeren Geometrie keine Änderung erfahren hat, gegen einen herkömmlichen Rastkopf ausgewechselt werden. Es ist ebenfalls möglich, bei einem Austausch des Werkzeuges einen neuen, das neue Werkzeug identifizierenden Rastkopf gegen den ursprünglich montierten Rastkopf auszutauschen. Durch die isolierte Anordnung des einen Leitungsanschlusses des Widerstandes werden an dem Rastkopf zwei Meßpunkte ausgebildet, die es ermöglichen, den Widerstand des Rastkopfes mittels eines Ohmmeters zu ermitteln. Der erste Meßpunkt wird von dem isolierten, mit dem Rastkopf nicht in elektrischer Verbindung stehenden Leitungsanschluß des Widerstandes gebildet. Der nicht isolierte und somit mit dem Rastkopf in Verbindung stehende Leitungsanschluß bildet über die ganze Oberfläche des Rastkopfes den zweiten Meßpunkt. Eine vorteilhafte Weiterbildung besteht darin, daß die Bohrung durchgehend ausgebildet ist. Diese Bohrung weist Abschnitte unterschiedlichen Durchmessers auf, wobei ein Abschnitt angepaßt an einen Durchmesser des Widerstandes und ein Abschnitt angepaßt an einen Durchmesser des Leitungsanschlusses ausgebildet ist. Dies führt zu einer optimalen Lagerung des Widerstandes einerseits und einer elektrischen Verbindung des Leitungsanschlusses an den Rastkopf andererseits. Zur Optimierung der elektrischen Verbindung ist vorgesehen, daß im Bereich des BohrungsabschnitAußenfläche des Rastkopfes ausgehende Querbohrung angeordnet ist zur Ausbildung eines Schwächungswandbereiches zwischen dem betreffenden Bohrungsabschnitt und dem inneren Endbereich der Querbohrung. Diese Anordnung wird insofern genutzt, daß ein Leitungsanschluß des Widerstandes durch plastische Verformung des Schwächungswandbereiches in der Bohrung gefangen ist.

Weitere Vorteile und Einzelheiten der Erfindung sind nachstehend anhand eines zeichnerisch veranschaulichten Ausführungsbeispieles näher erläutert. Es zeigt:
- Fig. 1: einen in einen Werkzeugspeicher eingesetzten Werkzeugeinsatz in einer zum Teil im Schnitt dargestellten Ansicht;

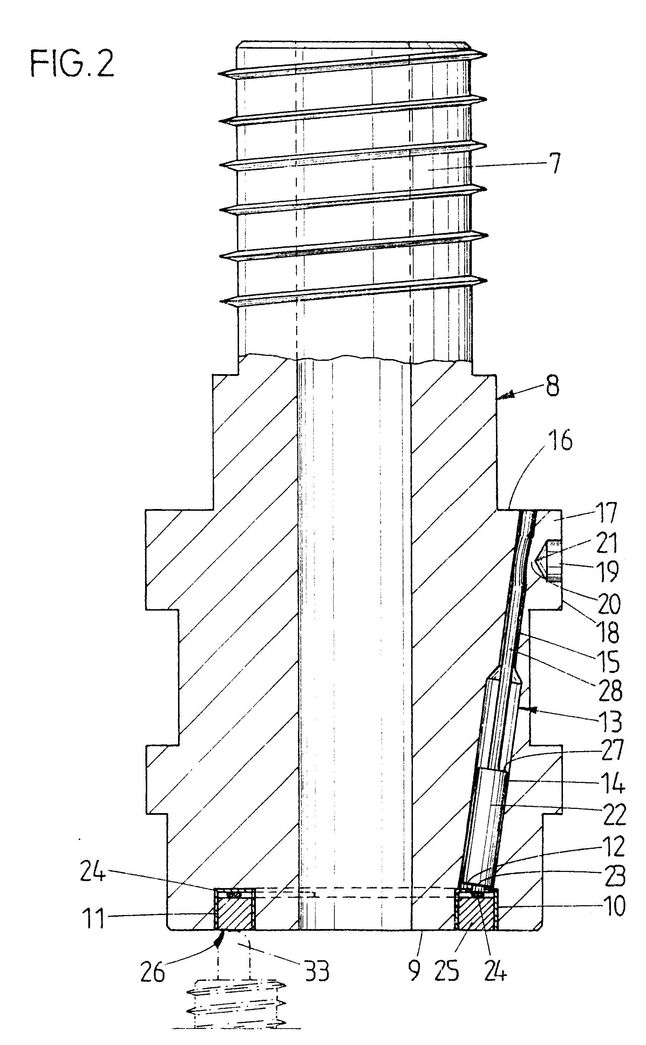

- Fig. 2: einen Rastkopf mit angeordnetem Widerstand in einer stark vergrößerten Schnittdarstellung;
- Fig. 3: eine Unteransicht des Rastkopfes und
- Fig. 4: eine schematische Darstellung einer elektrischen Schaltung zum Messen des Widerstandes des Werkzeugeinsatzes.

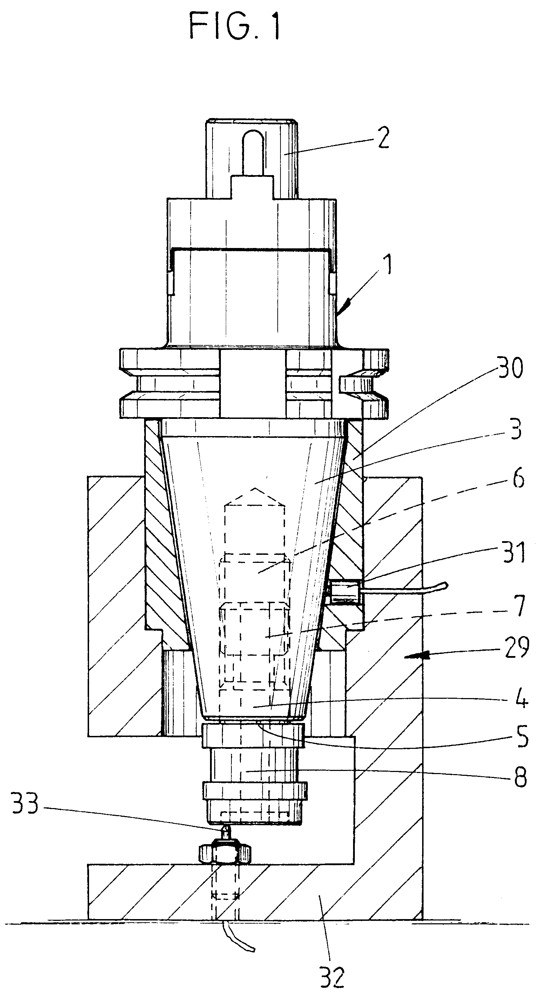

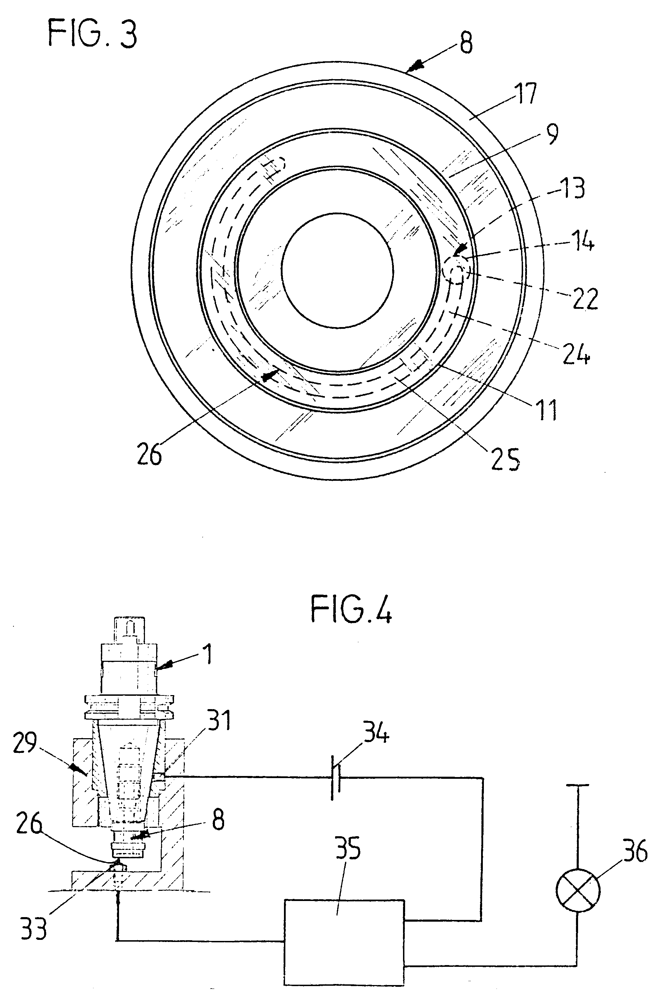

Die in Fig. 1 dargestellte, aus Metall erstellte Werkzeugaufnahme 1 besitzt an ihrem einen Ende eine Vorrichtung 2 zur Festlegung eines nicht dargestellten Werkzeuges. Der der Vorrichtung 2 entgegengelegene Teil der Werkzeugaufnahme 1 ist als Konus 3 ausgebildet, wobei sich der kleinere Durchmesser des Konus 3 im Endbereich 4 der Werkzeugaufnahme 1 befindet. An der durchmesserkleineren Stirnfläche 5 des Konus 3 ist eine axiale Gewindebohrung 6 zur Aufnahme eines mit einem Gewindezapfen 7 versehenen, aus Metall erstellten Rastkopfes 8 vorgesehen. Dieser im wesentlichen zylindrisch geformte Rastkopf 8 besitzt eine an der Stirnfläche 9 seines dem Gewindezapfen 7 entgegengesetzen Ende eine Ringnut 10 zur Aufnahme einer U-förmigen Isolationseinlage 11. Die Ringnut 10 ist in der Stirnfläche 9 eingelassen. Vom Boden 12 der Ringnut 10 ausgehend erstreckt sich eine Bohrung 13 in eine um ca. 10° von der Mittelachse abweichende und auf die Außenfläche des Rastkopfes 8 hinweisende Richtung. Der Bohrungsdurchmesser entspricht im ersten, dem Boden 12 zugewandten Abschnitt 14 in etwa dem Durchmesser eines handelsüblichen elektrischen Widerstandes und im darauf folgenden zweiten Abschnitt 15 in etwa dem Durchmesser eines Leitungsanschlusses eines Widerstandes. Der zweite Abschnitt 15 der Bohrung 13 mündet an der Stirnfläche 16 eines Radialsteges 17 des Rastkopfes 8. Dieser Radialsteg 17 dient unter anderem als Anschlagbegrenzung beim Einschrauben des Rastkopfes 8 in die Gewindebohrung 6 der Werkzeugaufnahme 1. Von der radialen Außenfläche 18 des Radialsteges 17 ausgehend ist eine Querbohrung 19 angeordnet, zur Ausbildung eines Schwächungswandbereiches 20 zwischen dem zweiten Bohrungsabschnitt 15 und dem inneren Endbereich 21 der Querbohrung 19. In dem ersten Abschnitt 14 der Bohrung 13 ist ein elektrischer Widerstand 22 angeordnet, wobei das eine Ende 23 in etwa mit dem Boden 12 der Ringnut 10 fluchtet. Von dem Ende 23 geht ein erster Leitungsanschluß 24 aus, der die in der Ringnut 10 befindliche Isolationseinlage 11 durchbricht und in diese eingelegt ist. Ein in die U-förmige Isolationseinlage 11 eingepreßter und mit der Stirnfläche 9 des Rastkopfes 8 fluchtender Metallring 25 beaufschlagt dabei den gegenüber dem Rastkopf 8 isolierten Leitungsanschluß 24 und dient somit als Gegenkontakt 26. Von dem anderen Ende 27 des Widerstandes 22 erstreckt sich ein zweiter Leitungsanschluß 28. Dieser liegt zum größten Teil in dem zweiten Abschnitt 15 der Bohrung 13 ein und endet in der Stirnfläche 16 des Radialsteges 17. Eine optimale elektrische Verbindung zwischen dem Leitungsanschluß 28 und dem Rastkopf 8 ist dadurch erzielt, daß der Schwächungswandbereich 20 plastisch verformt und somit der Leitungsanschluß 28 eingeklemmt ist. Die Verformung kann z. B. derart ausgeführt sein, daß mittels eines Körners oder dergleichen, der in die Querbohrung 19 eingeführt wird, ein Druck auf den Schwächungswandbereich 20 ausgeübt wird. Wie aus Fig. 1 ersichtlich, sitzt die Werkzeugaufnahme 1 mit ihrem Rastkopf 8 in einem Werkzeugspeicher 29. Dieser besitzt zum sicheren Halt der Werkzeugaufnahme 1 eine aus isolierendem Werkstoff (Kunststoff oder dergleichen) gebildete Konusaufnahme 30. In dieser Konusaufnahme 30 ist ein federbelasteter Zuleitungskontakt 31 angeordnet, der, isoliert vom Werkzeugspeicher 29, radial die Außenfläche des Konus 3 der Werkzeugaufnahme 1 beaufschlagt. Im Fußteil 32 des Werkzeugspeichers 29 ist ein Ableitungskontakt 33 untergebracht, der bei eingesetzter Werkzeugaufnahme 1 den Gegenkontakt 26 des Rastkopfes 8 federbelastet abtastet. Der Werkzeugspeicher 29 ist in eine elektrische Schaltung eingefügt, wobei der Zuleitungskontakt 31 mit dem Pluspol einer konstanten Gleichstromquelle 34 verbunden ist (siehe Fig. 4). Der Ableitungskontakt 33 steht mit einer Auswerteeinheit 35 in Verbindung, die bei Bedarf eine Lampe 36 einschaltet. Sobald die Werkzeugaufnahme 1 in den Werkzeugspeicher 29 eingesetzt ist, schließt sich der Stromkreis. Die zu prüfende Werkzeugaufnahme 1 dient somit zugleich als "Schalter" für die gesamte Meßvorrichtung.

Es ergibt sich somit folgende Verfahrensweise:
Zum Prüfen einer mit einem Werkzeug bestückten Werkzeugaufnahme 1 wird diese in den Werkzeugspeicher 29 eingesetzt. Gleichzeitig schließt sich der Stromkreis. Der mit dem Pluspol verbundene Zuleitungskontakt 31 hat eine direkte Verbindung über den Konus 3 der Werkzeugaufnahme 1 und dem Rastkopf 8 mit dem Leitungsanschluß 28 des Widerstandes 22. Der zweite Leitungsanschluß 24 ist über den Ableitungskontakt 33 mit einer in der Auswerteeinheit 35 enthaltenen Meßeinrichtung verbunden. Diese wiederum ist an dem Minuspol der Gleichstromquelle 34 angeschlossen. Durch diese Anordnung wird auf einfachste Weise eine Widerstandmessung vorgenommen. Der gemessene Wert entspricht dem elektrischen Widerstandswert des Widerstandes 22 und dem Eigenwiderstand der Werkzeugaufnahme 1 zwischen dem Zuleitungskontakt 31 und dem Widerstand 22. Da jedoch der Eigenwiderstand in jeder Werkzeugaufnahme 1 gleichen Types gleich groß ist, kann über ein einfaches Subtraktionsverfahren der gesuchte Widerstandswert errechnet werden. Dies kann automatisch durch die Auswerteeinheit 35 geschehen, die sogleich den Ist-Wert des Widerstandes mit einem zuvor eingegebenen Soll-Wert vergleicht. Sobald die beiden Werte übereinstimmen, schließt die Auswerteeinheit 35 einen Schalter, was zur Folge hat, daß die Lampe 36 aufleuchtet. Der Benutzer erhält somit ein optisches Signal, daß er nun die Werkzeugaufnahme 1 mit dem Werkzeug in die Werkzeugmaschine einsetzen darf. Es ist auch denkbar, daß die elektrische Schaltung in einer automatischen Werkzeugwechseleinrichtung installiert wird. Hierbei würde die Auswerteeinheit 35 in Abhängigkeit des Widerstandes 22 eine Freigabe oder eine Blockierung des Werkzeugeinsatzes durchführen.

## Patentansprüche

1. Werkzeugeinsatz mit einem Werkzeug in einer Werkzeugaufnahme (1), in welcher Werkzeugaufnahme (1) ein bestimmter zusätzlicher elektrischer Widerstand (22), zur elektrischen Individualisierung des Werkzeugeinsatzes angeordnet ist, dadurch gekennzeichnet, daß der erste Leitungsanschluß (28) des Widerstandes (22) elektrisch mit der metallischen Werkzeugaufnahme (1 verbunden ist und daß der zweite Leitungsanschluß (24) des Widerstandes (22) derart isoliert ist, daß er elektrisch nur mit einem kreisförmig ausgebildeten, symmetrisch zu einer Mittelachse des Werkzeugeinsatzes angeordneten, gegen die Werkzeugaufnahme (1) isolierten Gegenkontakt (26), zur drehwinkelunabhängigen Identifikation des Werkzeugeinsatzes leitend verbunden ist.

2. Werkzeugeinsatz nach Anspruch 1, dadurch gekennzeichnet, daß der Widerstand (22) in einem Rastkopf (8) der Werkzeugaufnahme (1) angeordnet ist.

3. Werkzeugeinsatz nach Anspruch 2, dadurch gekennzeichnet, daß der zweite Leitungsanschluß (24) des Widerstandes (22) mit einem in der Stirnfläche (9) des Rastkopfes (8) angeordnetem Gegenkontakt (26) elektrisch leitend verbunden ist.

4. Werkzeugeinsatz nach Anspruch 3, dadurch gekennzeichnet, daß der Gegenkontakt (26) ohne Änderung der äußeren Geometrie des Rastkopfes (8) angeordnet ist.

5. Werkzeugeinsatz nach einem der Ansprüche 2, 3 und 4, dadurch gekennzeichnet, daß der einseitig hinsichtlich des Leitungsanschlusses (24) isolierte Widerstand (22) in einer im wesentlichen axial orientierten Bohrung (13) des Rasterkopfes angeordnet ist.

6. Werkzeugeinsatz nach Anspruch 5, dadurch gekennzeichnet, daß die Bohrung (13) des Rasterkopfes durchgehend ausgebildet ist.

7. Werkzeugeinsatz nach einem der Ansprüche 5 und 6, dadurch gekennzeichnet, daß die Bohrung (13) Abschnitte 14,15) unterschiedlichen Durchmessers aufweist, wobei ein Abschnitt (14) so ausgebildet ist, daß er an einen Durchmesser des Widerstandes (22) angepaßt ist und ein mit vermindertem Durchmesser versehener Abschnitt (15) so ausgebildet ist, daß er an einen Durchmesser des Leitungsanschlusses (28) angepaßt ist.

8. Werkzeugeinsatz nach Anspruch 7, dadurch gekennzeichnet, daß im Bereich des Bohrungsabschnittes mit vermindertem Durchmesser (15) eine von einer radialen Außenfläche (18) des Rastkopfes (8) ausgehende Querbohrung (19) angeordnet ist, zur Ausbildung eines Schwächungswandbereiches (20) zwischen dem betreffenden Bohrungsabschnitt (15) und dem inneren Endbereich (21) der Querbohrung (19).

9. Verfahren zur Erkennung eines Werkzeugeinsatzes nach Anspruch 1 mit einem Werkzeug in einer Werkzeugaufnahme, wobei die Werkzeugaufnahme hinsichtlich ihres elektrischen Widerstandes individualisiert wird, dadurch gekennzeichnet, daß die Werkzeugaufnahme zusammen mit einem bestimmten zusätzlichen elektrischen Widerstand als Widerstand in eine elektrische Schaltung, zur drehwinkelunabhängigen Identifikation des Werkzeugeinsatzes eingesetzt wird.

10. Verfahren nach Anspruch 9, dadurch gekennzeichnet, daß die elektrische Schaltung in einem Werkzeugspeicher realisiert ist.

11. Verfahren nach Anspruch 10, dadurch gekennzeichnet, daß in Abhängigkeit des Widerstandes der Werkzeugaufnahme eine mechanische Freigabe oder eine mechanische Blockierung des Werkzeugeinsatzes in dem Werkzeugspeicher durchgeführt wird.

12. Verfahren nach einem der Ansprüche 9 bis 11, dadurch gekennzeichnet, daß in Abhängigkeit des Widerstandes der Werkzeugaufnahme eine optische oder akustische Meldung erfolgt.

13. Verfahren nach einem der Ansprüche 10 bis 12, dadurch gekennzeichnet, daß ein Stromkreis der elektrischen Schaltung durch ein Einsetzen des Werkzeugeinsatzes in den Werkzeugspeicher geschlossen wird.

## Claims

1. Tool insert with a tool in a tool holder (1), the said tool holder (1) featuring a certain additional electrical resistor (22) for electrical individualization of the tool insert, characterized in that the first line terminal (28) of the resistor (22) is electrically connected to the metallic tool holder (1) and that the second line terminal (24) of the resistor (22) is insulated in such a way that it is electrically connected solely with a circular-shaped mating contact (26) insulated against the tool holder (1) and arranged symmetrically in relation to a centreline of the tool insert for the purpose of identifying the tool insert independently of the rotary angle.

2. Tool insert according to Claim 1, characterized in that the resistor (22) is arranged in an indexing head (8) in the tool holder (1).

3. Tool insert according to Claim 2, characterized in that the second line terminal (24) of the resistor (22) is electrically connected to a mating contact (26) arranged in the end face (9) of the indexing head (8).

4. Tool insert according to Claim 3, characterized in that the mating contact (26) is arranged without any change to the outside geometry of the indexing head (8).

5. Tool insert according to any of Claims 2, 3 or 4, characterized in that the resistor (22) that is insulated at one end with respect to the line terminal (24) is arranged in a bore of generally axial orientation (13) in the indexing head.

6. Tool insert to Claim 5, characterized in that the bore (13) of the indexing head is executed as a through bore.

7. Tool insert according to either Claim 5 or 6, characterized in that the bore (13) features sections (14,15) of different diameter, one section (14) being shaped to match a diameter of the resistor (22) and one reduced-diameter section (15) shaped to match a diameter of the line terminal (28).

8. Tool insert according to Claim 7, characterized in that, in the region of the reduced-diameter bore section (15), there is located a transverse bore (19) starting at a radial outer surface (18) of the indexing head (8) to create a thinner-walled area (20) between the said bore section (15) and the inner end area (21) of the transverse bore (19).

9. Method for the identification of a tool insert according to Claim 1 with a tool in a tool holder, whereby the tool holder is individualized with respect to its electrical resistor, characterized in that the tool holder together with a certain additional electrical resistor is incorporated as a resistor in an electrical circuit for the purpose of identifying the tool insert independently of the rotary angle.

10. Method according to Claim 9, characterized in that the electrical circuit is located in a tool magazine.

11. Method according to Claim 10, characterized in that the tool insert is mechanically released or mechanically locked in the tool magazine depending on the resistance in the tool holder.

12. Method according to any of Claims 9 to 11, characterized in that a visual or acoustic signal is triggered depending on the resistance in the tool holder.

13. Method according to any of the Claims 10 to 12, characterized in that a current loop is closed in the electrical circuit when the tool insert is inserted into the tool magazine.

## Revendications

1. Insert d'outillage avec un outil dans une réception d'outil (1), dans laquelle est implantée une certaine résistance électrique (22) supplémentaire destinée à individualiser l'insert d'outillage, caractérisé en ce que le premier raccordement de conducteur (28) de la résistance (22) est électriquement relié à la réception métallique (1), et en ce que le deuxième raccordement de conducteur (24) de la résistance (22) est isolé de sorte telle qu'il n'est relié électriquement qu'avec un contre-contact (26) conçu sous une forme circulaire, implanté symétriquement par rapport à un axe médiant de l'insert d'outillage isolé par rapport à la réception d'outil (1) en vue de l'identification de l'insert d'outillage indépendamment de l'angle de rotation.

2. Insert d'outillage selon la revendication 1, caractérisé en ce que la résistance (22) est implantée dans une tête à encliquetage (8) de la réception d'outil (1).

3. Insert d'outillage selon la revendication 2, caractérisé en ce que le deuxième raccordement de conducteur (24) de la résistance (22) est relié électriquement avec un contre-contact (26) situé sur la face avant (9) de la tête à encliquetage (8).

4. Insert d'outillage selon la revendication 3, caractérisé en ce que le contre-contact (26) est implanté sans modification de la géométrie de la tête à encliquetage (8).

5. Insert d'outillage selon l'une des revendications 2, 3 et 4, caractérisé en ce que la résistance (22) isolée d'un côté par rapport au raccordement de conducteur (24) est implantée dans un alésage (13) orienté principalement axialement de la tête à encliquetage.

6. Insert d'outillage selon la revendication 5, caractérisé en ce que l'alésage (13) de la tête à encliquetage est conçu de manière traversante.

7. Insert d'outillage selon l'une des revendications 5 et 6, caractérisé en ce que l'alésage (13) présente des sectioons (14, 15) de diamètres différents, une section (14) étant formée de telle sorte qu'elle est adaptée à un diamètre de la résistance (22) et une section munie d'un diamètre inférieur (15) étant formée de telle sorte qu'elle est adaptée à un diamètre du raccordement de conducteur (28).

8. Insert d'outillage selon la revendication 7, caractérisé en ce qu'est situé, dans la section d'alésage munie d'un diamètre inférieur (15), un alésage transversal (19) partant d'une surface extérieure radiale (18) de la tête à encliquetage (8) destiné à former un secteur de paroi affaibli (20) entre la section d'alésage considérée (15) et la section finale intérieure (21) de l'alésage transversal (19).

9. Procédé de détection d'un insert d'outillage selon la revendication 1 avec un outil dans une réception d'outil, électriquement individualisée en ce qui concerne sa résistance électrique, caractérisé en ce que la réception d'outil est utilisée avec une certaine résistance électrique supplémentaire en tant que résistance dans une commutation électrique en vue de l'identification de l'insert d'outillage indépendamment de l'angle de rotation.

10. Procédé selon la revendication 9, caractérisé en ce que la commutation électrique est réalisée dans un accumulateur à outils.

11. Procédé selon la revendication 10, caractérisé en ce qu'une libération ou un blocage mécanique de l'insert d'outillage est réalisée dans l'accumulateur à outils en fonction de la résistance de la réception d'outil.

12. Procédé selon l'une des revendications 9 à 11, caractérisé en ce qu'une information optique ou acoustique est donnée en fonction de la résistance de la réception d'outil.

13. Procédé selon l'une des revendications 10 à 12, caractérisé en ce qu'un circuit de courant de la commutation électrique est fermé par la mise en place de l'insert d'outillage dans l'accumulateur à outils.
